# EUROPÄISCHE PATENTSCHRIFT

(11) **EP 1 500 835 B1**
(45) Veröffentlichungstag und Bekanntmachung des Hinweises auf die Patenterteilung: **05.11.2008**
(21) Anmeldenummer: 04010153.7
(22) Anmeldetag: 29.04.2004
(51) Int. Cl.: F16D 3/84

(54) **Abdichtanordnung für den Längenausgleich einer Kreuzgelenkwelle**
Sealing arrangement for a telescopic drive shaft with universal joints
Ensemble d'étancheité pour un arbre télescopique de transmisssion à joints de cardan

(30) Priorität: 21.07.2003 DE 10333227
(43) Veröffentlichungstag der Anmeldung: 26.01.2005
(73) Patentinhaber: Spicer Gelenkwellenbau GmbH, 45143 Essen (DE)
(72) Erfinder: Müller, Erhard, 45529 Hattingen (DE); Meineke, Manfred, 58454 Witten (DE); Schultze, Hans-Jürgen, 46240 Bottrop (DE)
(74) Vertreter: Harwardt, Günther

(56) Entgegenhaltungen:
- FR-A- 1 560 464
- GB-A- 1 201 573
- US-A- 1 496 236

## Beschreibung

Die Erfindung betrifft eine Abdichtanordnung des Längenausgleichs für eine Kreuzgelenkwelle, welcher ein rohrförmiges erstes Wellenelement und ein zweites Wellenelement, das im ersten Wellenelement drehfest und entlang einer Längsachse verstellbar aufgenommen ist, aufweist, wobei an eines der beiden Wellenelemente ein auf der Längsachse zentrierter Sitzabschnitt angeschlossen ist und wobei die Abdichtanordnung ferner eine Dichthülse umfasst, die auf dem Sitzabschnitt im montierten Zustand aufgenommen und die gesichert gehalten ist.

Die US-PS 1 496 236 beschreibt einen Längenausgleich im allgemeinen und insbesondere einen Längenausgleich einer Kreuzgelenkwelle mit einem rohrförmigen ersten Wellenelement und einem zweiten Wellenelement, das im ersten Wellenelement aufgenommen ist. Das zweite Wellenelement ist im ersten Wellenelement über eine Verzahnung drehfest aufgenommen und kann entlang einer Längsachse relativ zum ersten Wellenelement eine Axialverstellung ausführen. Das zweite Wellenelement bildet eine kreiszylindrische Sitzfläche für das Befestigungsende einer Dichthülse aus Metall. Das zweite Wellenelement weist im Anschluss an die Sitzfläche eine Umfangsnut auf, in die ein radial auf die Längsachse zu verformter Befestigungsabschnitt am Befestigungsende der Dichthülse eingreift, so dass die Dichthülse axial festgelegt ist. An ihrem freien Ende weist die Dichthülse einen nach innen gerichteten Kragen auf. Ferner weist sie ein Gewinde auf, auf welches eine weitere Hülse aufgeschraubt ist, die eine Dichtung aufnimmt. Diese Dichtung dient zur Abdichtung gegenüber der Außenfläche des rohrförmigen ersten Wellenelements.

Diese Druckschrift beschreibt auch eine weitere Ausführungsform, bei der die Dichthülse einem Ring zugeordnet ist, der auf einer Sitzfläche des zweiten Wellenelementes aufgepresst ist. Bei beiden Ausführungsformen ist die Montage aufwendig. Bei der ersten Ausführungsform muss der Befestigungsabschnitt durch ein Werkzeug in die Umfangsnut des zweiten Wellenelementes eingerollt werden. Im zweiten Fall ist ein Aufpressen erforderlich, wobei die Oberfläche des zweiten Wellenelementes beschädigt werden kann.

Von Nachteil ist bei beiden, dass eine relativ hohe Masse bewegt werden muss und darüber hinaus eine relativ lange Stützfläche erforderlich ist, um die Dichthülse so zu führen, dass ein einigermaßen zufriedenstellender Rundlauf gegeben ist. Die vorgesehene, relativ lange Sitzfläche verkürzt die Längenausgleichsmöglichkeit, so dass der axiale Bauraum nicht optimal genutzt wird.

Der Erfindung liegt die Aufgabe zugrunde, eine Abdichtanordnung zu schaffen, die nur geringe Unwuchten bei schnell rotierenden Gelenkwellen erzeugt und darüber hinaus eine einfache Montage der Dichthülse erlaubt.

Erfindungsgemäß wird diese Aufgabe dadurch gelöst, dass der Sitzabschnitt entlang der Längsachse verteilt mit Umfangsrillen oder mit einem Gewinde versehen ist, dass die Dichthülse aus Kunststoff besteht und ein Befestigungsende mit einer kreiszylindrischen Bohrung umfasst, welches auf den Sitzabschnitt mit Untermaß aufpressbar oder drehend, ein Gewinde entsprechend dem des Sitzabschnittes in die Dichthülse einschneidend, aufschraubbar ist.

Von Vorteil bei dieser Ausbildung ist, dass mit einfachen Mitteln eine Befestigung und Führung auf dem Sitzabschnitt für die Dichthülse erreicht wird. Darüber hinaus wird auch eine ausreichende Abdichtung im Bereich des Sitzabschnittes erzielt, so dass Schmiermittel aus dem Längenausgleich der Gelenkwelle nicht nach außen austreten kann. Besonders günstig wird die Abdichtung, wenn das Gewinde als Spitzgewinde gestaltet ist, so dass beim drehenden Montieren das Gewinde in die Dichthülse eingeschnitten wird. Günstig ist die Führung insbesondere, wenn das Spitzgewinde als Feingewinde gestaltet ist. Hierdurch wird eine sehr günstige Halterung erzielt und die Zentrierung und die Dichtigkeit sind verbessert. Dadurch ist auch eine Dichthülse mit einer geringen Wandstärke einsetzbar.

In Ausgestaltung der Erfindung ist vorgesehen, dass die Länge des Sitzabschnittes mindestens 10 % des Durchmessers der Bohrung der Dichthülse beträgt. Hierdurch wird eine ausreichend bemessene Führungslänge im Bereich des Sitzabschnittes für die Dichthülse erreicht, die zu guten Rundlaufeigenschaften führt.

Als Werkstoff für die Dichthülse ist zweckmäßigerweise ein schlagfester und fettbeständiger sowie witterungsbeständiger Kunststoff zu wählen. Ein solcher Kunststoff ist beispielsweise Polyamid (PA).

Sollte der Dichteffekt zwischen dem Sitzabschnitt und der Dichthülse nicht ausreichend sein, kann zwischen dem Sitzabschnitt und der Dichthülse ein Klebstoff angeordnet sein.

Ein bevorzugtes Ausführungsbeispiel der Erfindung ist in der Zeichnung schematisch dargestellt und anhand derselben erläutert.

Es zeigt
- Figur 1: eine Kreuzgelenkwelle, halb in Ansicht und halb geschnitten, und
- Figur 2: das Detail Z von Figur 1 im vergrößerten Maßstab.

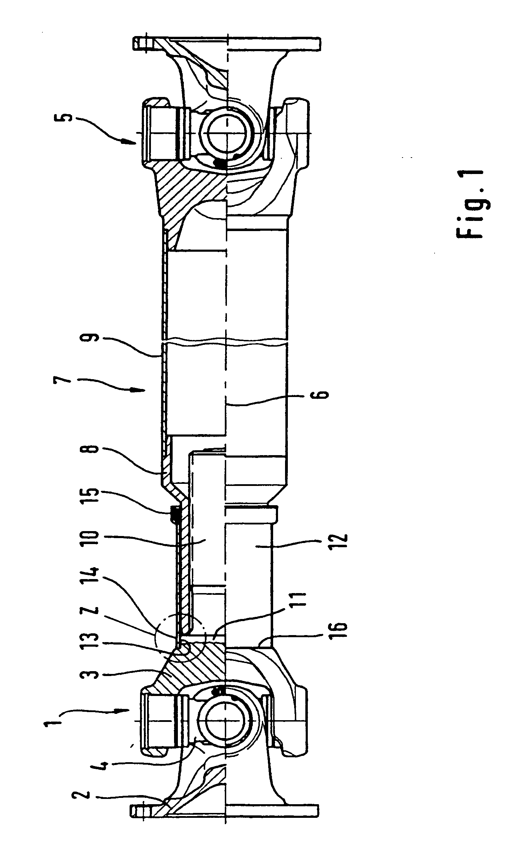

In Figur 1 ist eine Kreuzgelenkwelle mit einem ersten Kreuzgelenk 1, einem zweiten Kreuzgelenk 5 und einem Längenausgleich 7 dargestellt, der die beiden Kreuzgelenke 1, 5 miteinander verbindet.

Das erste Kreuzgelenk 1 umfasst eine erste Gelenkgabel 2, die zum Anschluss an ein treibendes oder getriebenes Bauteil einer Maschine oder eines Fahrzeuges dient, eine zweite Gelenkgabel 3 und ein beide gelenkig miteinander verbindendes Zapfenkreuz 4.

Das zweite Kreuzgelenk 5 ist im wesentlichen dem ersten Kreuzgelenk 1 entsprechend ausgebildet. Alle Bauteile sind auf der Längsachse 6 zentriert dargestellt. Die beiden Kreuzgelenke 1, 5 sind im nicht abgewinkelten Zustand, d.h. in der gestreckten Lage, dargestellt.

Der Längenausgleich 7 umfasst ein rohrförmiges erstes Wellenelement 8. Dieses ist über ein Verbindungsrohr 9 mit dem zweiten Kreuzgelenk 5 fest verbunden. Das erste Wellenelement 8 besitzt in seiner Bohrung eine Längsverzahnung, deren Zähne sich parallel zur Längsachse 6 erstrecken und umfangsverteilt um diese in der Bohrung angeordnet sind.

Mit der zweiten Gelenkgabel 3 ist ein zweites Wellenelement 10 einstückig verbunden. Es ist als Zapfen gestaltet dargestellt, kann aber auch rohrförmig gestaltet sein. Das zweite Wellenelement 10 weist außen eine Verzahnung auf, die zu der des ersten Wellenelementes 8 passt und mit der das zweite Wellenelement 10 in der Verzahnung des ersten Wellenelementes 8 verschiebbar entlang der Längsachse 6 aufgenommen ist, sich jedoch in Drehrichtung um die Längsachse 6 mit dem ersten Wellenelement 8 dreht, so dass ein Drehmoment übertragen werden kann.

Um den Reibungswiderstand in den Verzahnungen des ersten Wellenelementes 8 und zweiten Wellenelementes 10 gering zu halten, sind diese geschmiert. Damit das Schmiermittel nicht nach außen austreten kann und von außen auch keine Feuchtigkeit oder Schmutz in diesen Bereich der Verzahnungen eintreten kann, ist eine Abdichtanordnung vorgesehen, die eine Dichthülse 12 umfasst, welche das erste Wellenelement 8 außen umschließt und ein Befestigungsende 14 aufweist, mit dem sie auf einem Sitzabschnitt 11 des zweiten Wellenelementes 10, der im Anschluss an den die Verzahnung aufweisenden Abschnitt angeordnet ist, in Anlage gegen eine Schulter 16 gehalten ist, wie nachfolgend noch näher erläutert wird. Die Dichthülse 12 sitzt hierzu mit einem Abschnitt der Bohrung 13, der sich im Bereich des Befestigungsendes 14 befindet, fest auf dem Sitzabschnitt 11. Das freie Ende der Dichthülse 12 ist mittels einer Dichtung 15 gegenüber der Außenfläche des ersten Wellenelementes 8 abgedichtet und gleitet auf dieser bei Längenänderungen der Kreuzgelenkwelle im Betrieb.

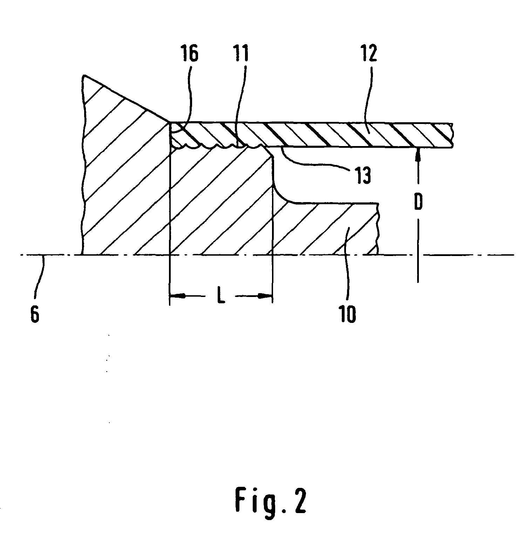

Aus Figur 2 ist die Verbindung zwischen der Dichthülse 12 und dem zweiten Wellenelement 10 näher ersichtlich. Wie aus Figur 2 erkenntlich, ist das zweite Wellenelement 10 im Bereich seines Sitzabschnittes 11 mit entlang der Längsachse 6 verteilten Rillen versehen, die zwischen sich spitze Kämme bilden . Die Rillen bilden Nuten um die Längsachse 6. Es sind eine Vielzahl von solchen Rillen entlang der Längsachse 6 hintereinander angeordnet. Alternativ kann der Sitzabschnitt 11 mit einem Spitzgewinde versehen sein, das vorzugsweise als Feingewinde gestaltet ist. Bei der ersten Ausführungsform mit umlaufenden Rillen wird die Dichthülse 12 mit ihrem Befestigungsende 14, dessen Bohrung 13 mit Untermaß hergestellt ist, auf den Sitzabschnitt aufgepresst, so dass sich ein Presssitz ergibt. Hierdurch entsteht eine Verkrallung. Sollte der erzielte Dichteffekt und Halteeffekt nicht ausreichen, ist es möglich, zwischen dem Sitzabschnitt 11 und der Dichthülse 12 einen Kleber vorzusehen. Hierdurch wird eine hermetische Abdichtung erzielt. Beim Aufschieben der Dichthülse 12 auf den Dichtabschnitt 11 dient die Schulter 16 als Anschlag, gegen welche das Befestigungsende 14 zur Anlage kommt.

Für den Fall der Gestaltung des Sitzabschnittes 11 mit einem Gewinde wird die Dichthülse 12 hinsichtlich ihrer Bohrung 13 ebenfalls mit Untermaß hergestellt. Sie wird mit einer Drehbewegung auf den Sitzabschnitt 11 aufgeschraubt, wobei sich das Gewinde des Sitzabschnittes 11 in die Wandung der Dichthülse 12 einschneidet. Durch diese Einschneidebewegung in Form eines Gewindes wird eine sichere Führung der Dichthülse 12 erreicht. Im Verlauf des Aufschraubens wird auch eine entsprechende Ausrichtung gegenüber der Längsachse 6 erzielt, so dass die Rundlaufeigenschaften der Verbindung gut sind. Die Verwendung eines Spitzgewindes in Form eines Feingewindes hat auch den Vorteil, dass ein guter Dichteffekt erzielt wird, weil ein langes Labyrinth erzielt wird, durch das kein Fett austreten kann. Diese Verbindung ist besonders einfach herstellbar. Aufgrund der Auswahl als Feingewinde wird es möglich, ein relativ dünnwandiges Rohr als Dichthülse 12 zu wählen. Da Kreuzgelenkwellen dieser Bauart häufig auch in Fahrzeugen, d.h. insbesondere Nutzkraftwagen, eingesetzt werden, die auch im Gelände arbeiten, besteht die Gefahr der Berührung mit Fremdkörpern, beispielsweise Steinen, und es sind darüber hinaus erhebliche Witterungseinflüsse gegeben, so dass es sinnvoll ist, insbesondere einen wetterfesten und schlagfesten Werkstoff zu wählen, was bei Polyamid der Fall ist.

Von Vorteil ist, dass die Dichthülse aus Kunststoff einfach austauschbar ist, da kein Schweißen erforderlich ist oder kein Verformungsprozess erforderlich ist, der für die Montage auszuführen ist. Darüber hinaus ist das Anbringen von Wuchtgewichten durch Kleben möglich, was entsprechend einfach ist. Darüber hinaus ist die Herstellung von einem Rohr ausgehend günstig.

### Bezugszeichenliste

- 1: erstes Kreuzgelenk
- 2: erste Gelenkgabel
- 3: zweite Gelenkgabel
- 4: Zapfenkreuz
- 5: zweites Kreuzgelenk
- 6: Längsachse
- 7: Längenausgleich
- 8: erstes Wellenelement
- 9: Verbindungsrohr
- 10: zweites Wellenelement
- 11: Sitzabschnitt
- 12: Dichthülse
- 13: Bohrung
- 14: Befestigungsende
- 15: Dichtung
- 16: Schulter

- D: Durchmesser
- L: Länge

## Patentansprüche

1. Abdichtanordnung des Längenausgleichs (7) für eine Kreuzgelenkwelle, welcher ein rohrförmiges erstes Wellenelement (8) und ein zweites Wellenelement (10), das im ersten Wellenelement (8) drehfest und entlang einer Längsachse (6) verstellbar aufgenommen ist, aufweist, wobei an eines der beiden Wellenelemente (10) ein auf der Längsachse (6) zentrierter Sitzabschnitt (11) angeschlossen ist und wobei die Abdichtanordnung ferner eine Dichthülse umfasst, die auf dem Sitzabschnitt (11) im montierten Zustand aufgenommen und gesichert gehalten ist,
**dadurch gekennzeichnet,**
**dass** der Sitzabschnitt (11) entlang der Längsachse (6) verteilt mit Umfangsrillen oder mit einem Gewinde versehen ist,
**dass** die Dichthülse (12) aus Kunststoff besteht und ein Befestigungsende (14) mit einer kreiszylindrischen Bohrung (13) umfasst, welches auf den Sitzabschnitt (11) mit Untermaß aufpressbar oder drehend, ein Gewinde entsprechend dem des Sitzabschnittes (11) in die Dichthülse (12) einschneidend, aufschraubbar ist.

2. Abdichtanordnung nach Anspruch 1,
**dadurch gekennzeichnet,**
**dass** das Gewinde ein Spitzgewinde ist.

3. Abdichtanordnung nach Anspruch 1,
**dadurch gekennzeichnet,**
**dass** das Gewinde ein Feingewinde ist.

4. Abdichtanordnung nach Anspruch 1,
**dadurch gekennzeichnet,**
**dass** die Länge (L) des Sitzabschnittes (11) mindestens 10 % des Durchmessers (D) der Bohrung (13) der Dichthülse (12) beträgt.

5. Abdichtanordnung nach Anspruch 1,
**dadurch gekennzeichnet,**
**dass** die Dichthülse (12) aus Polyamid (PA) besteht.

6. Abdichtanordnung nach einem der Ansprüche 1 bis 5,
**dadurch gekennzeichnet,**
**dass** zwischen dem Sitzabschnitt (11) und der Dichthülse (12) ein Klebstoff angeordnet ist.

## Claims

1. A sealing arrangement of the telescopic member (7) for a drive shaft with universal joints, said member comprising a tubular first shaft element (8) and a second shaft element (10) being rotationally fixedly received within the first shaft element (8) and slidingly adjustable along a longitudinal axis (6), wherein a seat portion (11) centered on the longitudinal axis (6) is attached to one of the two shaft elements (10) and wherein the sealing arrangement further comprises a sealing sleeve which is received on the seat portion (11) in the assembled state and safely retained thereon,
**characterized in**
**that** the seat portion (11) is provided with circumferential grooves or a thread along the longitudinal axis (6),
**that** the sealing sleeve (12) is made of plastics and comprises a fastening end (14) having a circular cylindrical bore (13), said end being mountable in press fit with undersize or can be screwed onto the seat portion (11) wherein a thread which corresponds to that of the seat portion (11) is cut into the sealing sleeve (12) by means of turning.

2. The sealing arrangement according to Claim 1,
**characterized in**
**that** the tread is a V-shaped thread.

3. The sealing arrangement according to Claim 1,
**characterized in**
**that** the thread is a fine pitch thread.

4. The sealing arrangement according to Claim 1,
**characterized in**
**that** length (L) of seat portion (11) is at least 10 % of the diameter (D) of bore (13) of sealing sleeve (12).

5. The sealing arrangement according to Claim 1,
**characterized in**
**that** sealing sleeve (12) is made of polyamide (PA).

6. The sealing arrangement according to one of the Claims 1 to 5,
**characterized in**
**that** an adhesive is disposed between seat portion (11) and sealing sleeve (12).

## Revendications

1. Dispositif d'étanchéité de la compensation d'allongement (7) d'une transmission de cardan, qui présente un premier élément d'arbre tubulaire (8) et un deuxième élément d'arbre (10), lequel est logé dans le premier élément d'arbre (8) de manière solidaire en rotation et déplaçable le long d'un axe longitudinal (6), moyennant quoi une portion de siège (11) centrée sur l'axe longitudinal (6) est raccordée à un des deux éléments d'arbre (10) et moyennant quoi le dispositif d'étanchéité comprend en outre un manchon d'étanchéité, qui repose en l'état monté sur la portion de siège (11) et est maintenu de manière sécurisée,
**caractérisé en ce que**
la portion de siège (11) est pourvue de rainures périphériques ou d'un filetage répartis le long de l'axe longitudinal (6),
**en ce que** le manchon d'étanchéité (12) est constitué de plastique et comprend une extrémité de fixation (14) comportant un alésage (13) cylindrique, laquelle peut être pressée avec une cote minorée sur la portion de siège (11) ou peut être vissée de manière rotative sur un filetage correspondant à celui de la portion de siège (11) par cisaillement dans le manchon d'étanchéité (12).

2. Dispositif d'étanchéité selon la revendication 1,
**caractérisé en ce que**
le filetage est un filetage triangulaire.

3. Dispositif d'étanchéité selon la revendication 1,
**caractérisé en ce que**
le filetage est un filetage à pas fin.

4. Dispositif d'étanchéité selon la revendication 1,
**caractérisé en ce que**
la longueur (L) de la portion de siège (11) correspond à au moins 10% du diamètre (D) de l'alésage (13) du manchon d'étanchéité (12).

5. Dispositif d'étanchéité selon la revendication 1,
**caractérisé en ce que**
le manchon d'étanchéité (12) est constitué de polyamide (PA).

6. Dispositif d'étanchéité selon une des revendications 1 à 5,
**caractérisé** à ce que
un adhésif est disposé entre la portion de siège (11) et le manchon d'étanchéité (12).
